# EUROPÄISCHE PATENTSCHRIFT

(11) **EP 0 454 949 B1**
(45) Veröffentlichungstag und Bekanntmachung des Hinweises auf die Patenterteilung: **29.03.1995**
(21) Anmeldenummer: 91101183.1
(22) Anmeldetag: 30.01.1991
(51) Int. Cl.: G10K 11/16

(54) **Luftschall absorbierendes Formteil**
Air-conducted sound absorbing element
Moyen d'amortissement de son transmis par l'air

(30) Priorität: 11.04.1990 DE 4011705
(43) Veröffentlichungstag der Anmeldung: 06.11.1991
(73) Patentinhaber: Firma Carl Freudenberg, 69469 Weinheim (DE)
(72) Erfinder: Akyol, T. P. Dr., W-6940 Weinheim (DE); Hiller, Michael Dr., W-6943 Birkenau (DE); Stief, Reinhard, W-6940 Weinheim (DE)

(56) Entgegenhaltungen:
- EP-A- 0 244 755
- DE-B- 2 834 683
- GB-A- 2 038 410
- US-A- 4 421 811

## Beschreibung

Die Erfindung betrifft ein Luftschall absorbierendes Formteil, welches auf seiner zur Schallquelle gerichteten Oberfläche akustische Resonatoren mit verschiedenen Resonanzfrequenzen aufweist. Solche Formteile sind aus der DE-OS 24 56 916 bekannt. Sie dienen als Verkleidungselement, insbesondere für die Innenauskleidung der Fahrzeugzelle oder der Führerkabine von Motorfahrzeugen bzw. Maschinen. Die genannte Anmeldung lehrt, ein solches Verkleidungselement mit einem Zusatzelement so zu kombinieren, daß ein Hohlkörper entsteht, der über eine Verbindungsleitung zum Helmholtz-Resonator wird. Es wird vorgeschlagen, dessen Oberfläche weiter mit Helmholtz-Resonatoren zu bestücken, wobei zwei, drei oder noch mehr Resonatoren verwendet werden, die auf unterschiedliche Frequenzen abgestimmt sind gemäß der in der Schallphysik bekannten Helmholtz-Formel, um den Schalldruck im gesamten von den stehenden Wellen beeinflußten Frequenzbereich zu vermindern. Die Elemente sind unterteilt und bilden, auch zum Beispiel flächendeckend, nebeneinander liegende, großvolumige Helmholtz-Resonatoren. Die Formteil-Oberfläche, welche diese Resonatoren trägt, kann als Plattenabsorber ausgelegt sein, welcher die Helmholtz-Resonatoren formschlüssig, unter Freilassung deren Öffnungen, umfaßt. Dabei können alle diese Komponenten aus Fasermaterial bestehen.

Nachteilig an dieser Ausführung ist der große Platzbedarf, da insbesondere auch beachtet werden muß, daß gleichresonante Resonatoren einander nicht in ihrem geometrischen Wirkungsbereich überschneiden, da ansonsten die Schalldämpfung wesentlich verschlechtert wird. Der hohe Raumbedarf dieser Resonatoren führt dazu, daß für die Anordnung einer Vielzahl, ein breites Frequenzband abdeckender Resonator-Elemente kein Platz zur Verfügung steht.

In EP-A-0 244 755 wird ein Plattenabsorber beschrieben, auf dessen geformter Platte nebeneinander liegende, gedrungene Luftkammern vorhanden sind, die durch Stege getrennt und allseits dicht sind. Unter Ausnutzung von Reibungsdämpfung werden die Biegeschwingungen der Wandungen und der die Luftkammern abdeckenden Folie zur akustischen Dämpfung herangezogen.

Ausgehend vom erstgenannten Stand der Technik hat die vorliegende Erfindung zur Aufgabe, ein gattungsgemäßes, Luftschall absorbierendes Formteil anzugeben, dessen Platzbedarf für die einzelnen Resonatoren deutlich geringer ist, insbesondere bezüglich der Bauhöhe, das über einen Frequenzbereich von etwa 16 Hz bis 2,5 kHz möglichst gleichmäßige Resonanz- und damit Dämpfungseigenschaften aufweist und das in einem einzigen Arbeitszyklus verformbar ist.

Die Lösung dieser Aufgabe besteht in einem Formteil mit den Kennzeichen des ersten Patentanspruchs. Vorteilhafte Ausgestaltungen sind in den Unteransprüche aufgeführt.

Aufgrund der Tatsache, daß tieferfrequente Helmholtz-Resonatoren einen größeren Wirkungsradius besitzen als höherfrequente, muß zur Durchführung der Erfindung darauf geachtet werden, daß die im Wirkungsbereich des jeweils tieferfrequenten Helmholtz-Resonators befindlichen, benachbarten, höherfrequenten Helmholtz-Resonatoren voneinander verschiedene Resonanzfrequenzen besitzen. Ansonsten tritt eine wesentliche Verschlechterung der Resonanzwirkung des tieferfrequenten Helmholtz-Resonators auf. Die Abstimmung der Resonatoren ist nicht Gegenstand der vorliegenden Erfindung, da die Ausgestaltung aufgrund der Helmholtz-Formel dem Fachmann geläufig ist.

Die die Helmholtz-Resonatoren tragende Fläche des Formteils ist als Plattenabsorber ausgelegt, welcher die Resonatoren formschlüssig umfaßt und dabei deren Öffnungen freiläßt. Die Wandungen dieser Resonatoren werden also aus dem Werkstoff des diese tragenden Plattenabsorbers gebildet. Unter Plattenabsorber wird verstanden ein biegeweiches, flächiges Gebilde, welches bei Auftreffen von Luftschall zu Eigenschwingungen angeregt wird, wobei die Schallenergie in Wärme umgewandelt wird. Als Werkstoffe können alle polymeren Materialien dienen, ob in geschäumter oder kompakter Form.

Die Kombination von Helmholtz-Resonatoren und Plattenabsorbern führt gegenüber einer Ausführung, die ausschließlich diese Resonatoren aufweist, zu einer weiteren Erhöhung des Absorptionsgrades bis zu etwa 30 % des Normalwertes.

Die Ineinanderschachtelung der Wirkungsbereiche der Einzel-Resonatoren ermöglicht es, in bezug auf die flächigen Ausmaße beliebig kleine, Luftschall absorbierende Formteile herstellen zu können.

In einer vorteilhaften Ausgestaltung der Erfindung ist der Plattenabsorber auf seiner zur Schallquelle gerichteten Oberfläche mit einer porösen Schicht bedeckt, welche aus Fasern oder aus offenporigem Schaumstoff bestehen kann. Diese poröse Schicht hat die Wirkung, daß insbesondere im höherfrequenten Bereich eine nochmalige Verbesserung der Absorption erzielt werden kann.

Das erfindungsgemäße Formteil kann mit jeder beliebigen Unterlage verschweißt, aufgeclipst oder auf diese aufgeklebt werden. Bei geformten Unterlagen, wie zum Beispiel bei Motorkapselungen, besteht ein weiterer Vorteil der Erfindung darin, daß das Formteil mit dem die Motorkapsel bildenden Bauteil in einem Arbeitsgang verformt werden kann.

Es ist möglich, das erfindungsgemäße Formteil in einem Frequenzbereich von 16 Hz bis 2,5 kHz gezielt den jeweils zu dämpfenden Frequenzen oder Frequenzbereichen anzupassen; und dies auch gezielt in bestimmten Bereichen des Formteils.

Da die Auswahl des Werkstoffs in den obengenannten Grenzen nicht kritisch ist, ist eine große Freiheit bezüglich der Materialien gegeben. So kann das Formteil bei motornaher Anwendung öl- und wasserbeständig sowie hitzefest ausgestaltet werden. Es kann ferner eingesetzt werden zur Geräuschdämmung von Maschinen, zum Beispiel in Gehäusen von Haushaltsgeräten oder im industriellen Bereich.

Die Figuren sollen die Erfindung näher verdeutlichen. Es zeigen:
- Figur 1: den Querschnitt einer Motorabschirmung;
- Figur 2: eine weitere Ausführung einer Motorabschirmung;
- Figur 3: eine Motorabschirmung im Einbauzustand;
- Figur 4: ein erfindungsgemäßes Formteil in vergrößerter Querschnittsdarstellung;
- Figur 5: den Querschnitt durch eine Absorber-Kombination;
- Figur 6: ein aus Partikelschaum hergestelltes Formteil.

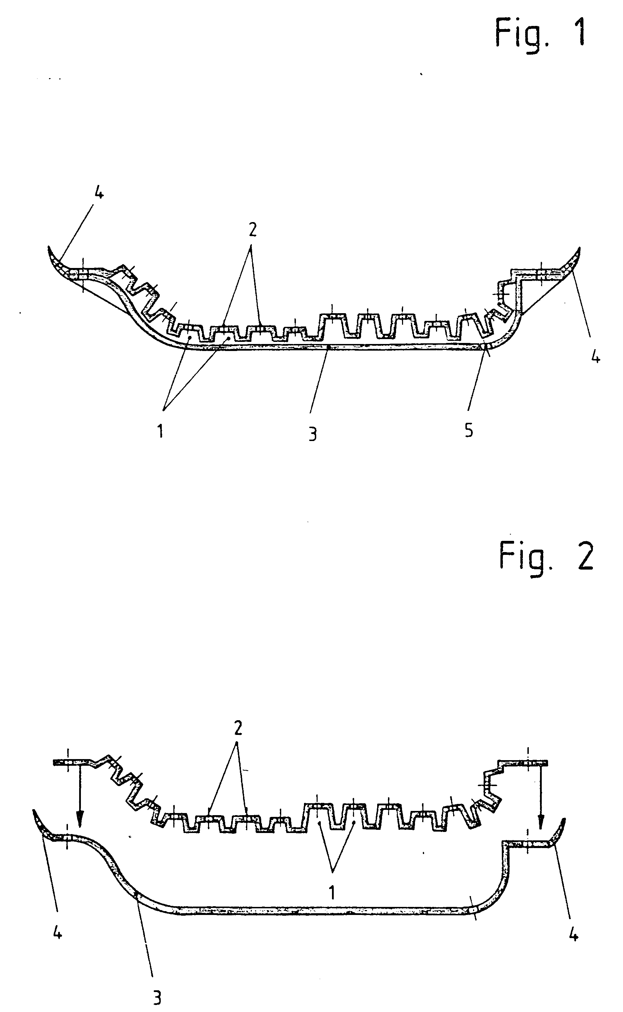

Zunächst sei Figur 1 betrachtet. Sie zeigt den Querschnitt einer Motorabschirmung, die in einem Arbeitszyklus in Blastechnik hergestellt ist. Die unterschiedlich großen, flächendeckenden Kammern 1 mit gezielten Lochgrößen 2 von 1 bis 20 mm Durchmesser wirken als Helmholtz-Resonatoren und dienen der Schallreduzierung im Motorraum. Die Außenseite 3 hat eine glatte Oberfläche und verbessert dadurch die Aerodynamik. Um eine gute Abdichtung zur Karosserie zu bekommen, wird eine elastische Dichtlippe 4 ins Blaswerkzeug eingelegt und mit dem Formteil verbunden. Am tiefsten Montagepunkt sind Schlitze bzw. Löcher 5 vorgesehen, damit Flüssigkeiten, wie Spritzwasser und Lecköl, das durch die Löcher 2 läuft, entweichen kann. Der Werkstoff ist in diesem Falle glasfaserverstärktes Polypropylen für die Außenseite und für die Resonatoren Polypropylen. Ohne Schwierigkeiten können auch Polykarbonat oder Polyamid verwendet werden.

Es muß betont werden, daß die Verbindung der Kammern 1 miteinander am Boden der Helmholtz-Resonatoren, wie gezeigt, keinen Einfluß auf die Dämpfungseigenschaften des Formteils hat, da die an der Außenschale 3 befindlichen Luftschichten bereits nicht mehr durch Schall angeregt werden. Diese Verbindung an der Oberfläche der Außenschale 3 kann daher als Dränage genützt werden.

Figur 2 zeigt den Querschnitt einer Motorabschirmung, die im Zweitaktverfahren hergestellt ist und wobei beide Teile 3 und 2 durch Schweißen oder Kleben miteinander verbindbar sind. Das Kammerngebilde 1 mit den Öffnungen 2 wird separat hergestellt und abgestimmt. Ebenfalls separat angefertigt wird die Außenschale 3 mit angesetzter Dichtlippe 4. Beide Schalen werden über Schweiß- oder Klebetechnik zusammengefügt und bilden danach eine Einheit gemäß der Anordnung in Figur 1.

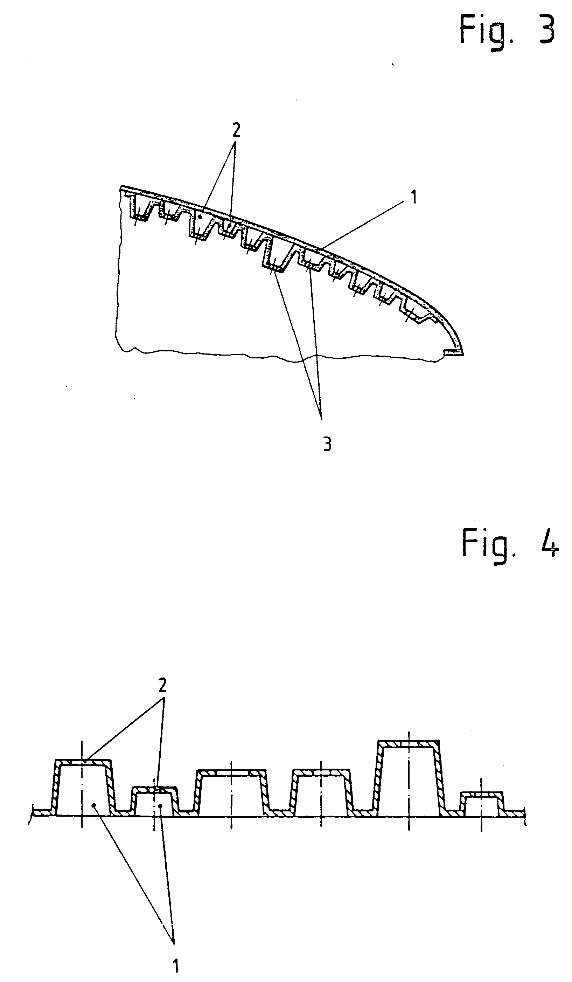

Figur 3 zeigt das Bauteil gemäß Figur 1 oder 2 in Einbaulage oberhalb des Motors. Die Motorhaube 1 aus Blech wird zusammen mit den Helmholtz-Absorberkammern 2 und den Öffnungen 3 in einem Arbeitsgang geformt.

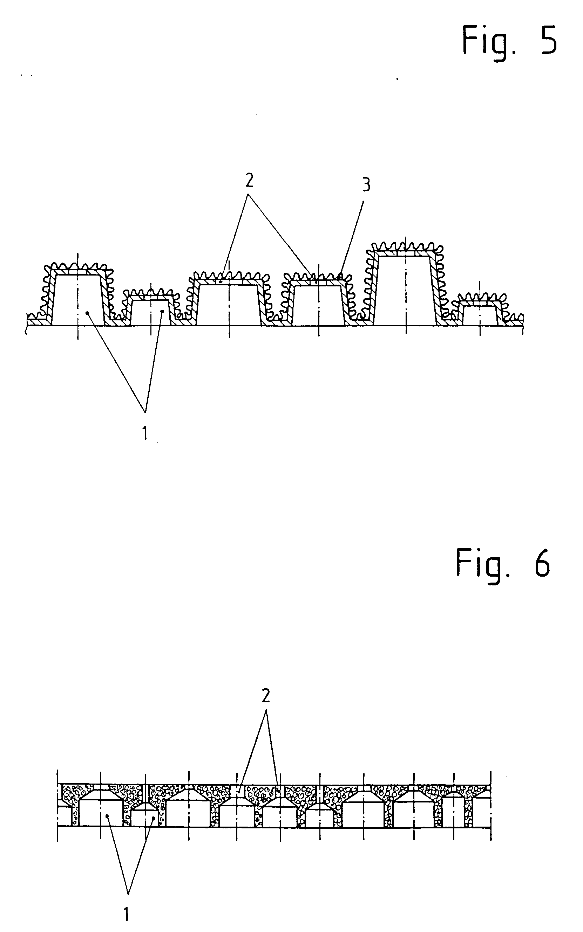

Figur 4 zeigt die Helmholtz-Resonatoren in schematischer Darstellung im vergrößerten Querschnitt. Die Kammern 1 sind unterschiedlich groß; und die Öffnungen 2 werden gemäß der Helmholtz-Gleichung in ihrer Dimension gefertigt.

Figur 5 zeigt eine Absorberkombination, die eine besonders hohe Schallabsorption bewirkt. Die Grundform mit den Kammern 1 und den Öffnungen 2 kann durch Vakuumformen, Pressen, Maskenspritzen oder Blastechnik hergestellt werden. Zusätzlich wird die zur Schallseite gerichtete Fläche mit einem mit Bindemittel versehenen Vliesstoff 3 belegt.

Figur 6 zeigt den Querschnitt durch ein Formteil, das in einem Arbeitsgang aus Partikelschaum hergestellt ist. Die Partikel können je nach Einsatzgebiet aus Polystyrol, Polyethylen oder Polypropylen bestehen. Die Kammern 1 haben unterschiedliche Größen. Die Position 2 bezeichnet die Öffnungen in den Helmholtz-Resonatoren.

## Patentansprüche

1. Luftschall absorbierendes Formteil, enthaltend flächendeckend angeordnet auf seiner zur Schallquelle gerichteten Oberfläche Helmholtz-Resonatoren mit verschiedenen Resonanzfrequenzen, wobei die die Resonatoren tragende Oberfläche des Formteils als Plattenabsorber ausgelegt ist, welcher die Helmholtz-Resonatoren formschlüssig umfaßt und dabei deren Öffnungen freiläßt, und wobei der Werkstoff der Helmholtz-Resonatoren identisch mit demjenigen des Plattenabsorbers ist, dadurch gekennzeichnet, daß die Anordnung der Helmholtz-Resonatoren derart ist, daß die im Wirkungsbereich des jeweils tieferfrequenten Helmholtz-Resonators befindlichen, benachbarten Helmholtz-Resonatoren voneinander verschiedene Resonanzfrequenzen besitzen.

2. Formteil nach Anspruch 1, dadurch gekennzeichnet, daß der Plattenabsorber auf seiner zur Schallquelle gerichteten Oberfläche mit einer porösen Schicht bedeckt ist.

3. Formteil nach Anspruch 2, dadurch gekennzeichnet, daß die poröse Schicht ein Faservliesstoff ist.

4. Formteil nach Anspruch 2, dadurch gekennzeichnet, daß die poröse Schicht aus offenporigem Schaumstoff besteht.

## Claims

1. An air-conducted sound absorbing element, including Helmholtz resonators with different resonant frequencies arranged over the full area of its surface directed towards the sound source, the surface of the element bearing the resonators being designed as a panel absorber which encloses the Helmholtz resonators with a form fit while leaving their openings free, and the material of the Helmholtz resonators being identical to that of the panel absorber, characterized in that the arrangement of the Helmholtz resonators is such that the neighbouring Helmholtz resonators in the effective region of the respectively lower-frequency Helmholtz resonator have resonant frequencies different from each other.

2. An element according to Claim 1, characterized in that the panel absorber is covered on its surface directed towards the sound source with a porous layer.

3. An element according to Claim 2, characterized in that the porous layer is a nonwoven fabric.

4. An element according to Claim 2, characterized in that the porous layer is composed of open-cell foam.

## Revendications

1. Moyen d'amortissement de son transmis par l'air, pourvu de résonateurs de Helmholtz ayant des fréquences de résonance différentes et couvrant sa surface tournée vers la source sonore, la surface du moyen d'amortissement portant les résonateurs étant conçue comme une plaque d'absorption qui entoure les résonateurs de Helmholtz en s'adaptant à leur forme tout en laissant libres leurs ouvertures, la matière composant les résonateurs de Helmholtz étant la même que pour la plaque d'absorption, ce moyen d'amortissement étant caractérisé par un agencement des résonateurs tel que tous les résonateurs de Helmholtz contigus se trouvant dans la zone d'action d'un résonateur de Helmholtz donné à basse fréquence possèdent des fréquences de résonance différentes les unes des autres.

2. Moyen d'amortissement selon la revendication 1, caractérisé en ce que la plaque d'absorption est couverte, sur sa face dirigée vers la source sonore, d'une couche poreuse.

3. Moyen d'amortissement selon la revendication 2, caractérisé en ce que la couche poreuse est un tissu de type "nappe de fibres".

4. Moyen d'amortissement selon la revendication 2, caractérisé en ce que la couche poreuse est formée d'une mousse à pores ouverts.
